# EUROPEAN PATENT APPLICATION

(11) **EP 2 639 138 A2**
(43) Date of publication of application: **18.09.2013**
(21) Application number: 13159143.0
(22) Date of filing: 14.03.2013
(51) Int. Cl.: B62D 5/093

(54) **Synchronous steering control**

(30) Priority: 15.03.2012 US 201261611457 P
(71) Applicant: NACCO Materials Handling Group, Inc., Fairview, OR 97024 (US)
(72) Inventor: Chen, Chenyao, Fairview, OR 97024 (US); Rao, Chikka, Fairview, OR 97024 (US); Johnson, Ben, Fairview, OR 97024 (US); Moffat, Greg, Fairview, OR 97024 (US)
(74) Representative: Wunsch, Alexander

(57) **Abstract**

An exemplary method correlates a steering device position to a steered element position by determining a target steering angle based on a detected position of the steering device; determining a vehicle steering angle based on a detected position of the steered element; determining a steering correction based on comparing the target steering angle to the vehicle steering angle; and applying a steering control multiplier to affect the steering correction in response to a difference between the target steering angle and the vehicle steering angle being larger than a threshold difference, and in response to a detected vehicle parameter.

## Description

### Related Applications

This application claims priority to U.S. provisional application No. 61/611,457 under 35 U.S.C. § 119(e), titled "Synchronous Steering Control" and filed on March 15, 2012; the entirety of which is incorporated herein by reference.

### Background

In general, synchronous steering enables a steering device to return to the same position when a vehicle's steered element, such as wheels or a rudder, is set for a particular direction, such as straight ahead travel, and a steering system capable of slippage between the position of the steering device and the steered element is employed, such as a hydraulic or electronic steering system. When such steering systems are used without synchronous steering, the steering device tends to 'drift' such that each time the steered element is set for straight ahead travel the steering device returns to a different position.

### Summary

In one embodiment, a method for correlating a steering device position to a steered element position comprises determining a target steering angle based on a detected position of the steering device; determining a vehicle steering angle based on a detected position of the steered element; determining a steering correction based on comparing the target steering angle to the vehicle steering angle; and applying a steering control multiplier to affect the steering correction in response to a difference between the target steering angle and the vehicle steering angle being larger than a threshold difference, and a detected vehicle parameter.

In another embodiment, a system for correlating a steering device position to a steered element position comprises a first sensor arranged to detect a position of the steering device, wherein the first sensor communicates with a processor configured to determine a target steering angle based on the detected position of the steering device. A second sensor is arranged to detect a position of the steered element, wherein the second sensor communicates with the processor and the processor is further configured to determine a vehicle steering angle based on the detected position of the steered element. The processor is further configured to determine a steering correction based on comparing the target steering angle to the vehicle steering angle, and to determine a steering control multiplier based on a difference between the target steering angle and the vehicle steering angle being larger than a threshold difference, and a detected vehicle parameter. A steering correction system is configured to apply the steering control multiplier to affect the steering correction.

### Brief Description of the Drawings

FIG. 1 is a circuit diagram illustrating an embodiment of a synchronous steering control system.

FIG. 2 is a logic control diagram associated with operation of the synchronous steering control system of FIG. 1.

FIG. 3 is a diagram illustrating a hypothetical steering control multiplier applied as a function of vehicle travel speed.

FIG. 4 is a diagram illustrating a hypothetical steering control multiplier applied as a function of a steering rotational speed.

FIG. 5 is a diagram illustrating a hypothetical steering control valve hydraulic output as a function of a steering rotational speed.

FIG. 6 is a diagram illustrating a hypothetical mapped coordinate system associated with a synchronous steering control system.

FIG. 7 illustrates an example process of synchronizing a steering control system.

### Detailed Description

The following description provides details for certain embodiments, but is not meant to be limiting in scope. The invention is described by the claims that follow the detailed description.

In a drive-by-wire, hydrostatic, or other suitable types of steering systems, there may be no direct mechanical linkage between a steering device, such as a steering wheel, and a steered element, such as a steer axle. In some examples, the steering commands provided by a drive-by-wire steering system may comprise electronic communications transmitted via a wired communication system, a wireless communication system, or both. In examples using a hydrostatic steering system, there may be a hydraulic linkage, or circuit, between the steering device and the steered element. For example, a steering wheel may be used by an operator to control a direction of travel of an industrial vehicle, such as a forklift truck, or a steering wheel may be used by an operator to control a direction of travel of a marine vehicle, such as a boat. Based on input received from the steering wheel, the steering system may determine the direction of steering, the speed of steering, or both. For example, a steer axle angle may be determined by a steered wheel angle, or an angle of a ship's rudder may be measured. In a tight operation space, the operator may need to control the steering system when steering is initiated. By synchronizing both the steering device angle (desired steering angle) to the steered element angle (actual steering angle), more accurate control of vehicle operation may be achieved.

The following examples pertain to industrial vehicles, particularly forklift trucks, but claimed steering systems and methods may be used with other suitable vehicles. The relative rotational angle of the steering wheel may be associated with an expected or desired amount of steering request. For example, some steering wheels include a control handle or knob on the circumference of the steering wheel. For a straight ahead steering position (i.e., return to center position), the control handle may be positioned at the same relative location on the steering wheel, for example at twelve o-clock (zero degrees), six o-clock (180 degrees), or some other rotational angle.

Without a mechanical connection between the steering wheel angle and the steer axle position, the relationship between the two may not be completely known or defined. Additionally, as a commonly available forklift truck with a hydraulic steering system is driven the steering wheel angle for straight ahead driving condition changes over time which is due to inherent leakage in the steering unit for a hydraulic system. Typical drive-by-wire systems are programmed to constantly monitor steering device position and steered element position and to adjust the position of at least the steering device or the steered element to maintain a defined relationship between the two. Furthermore, the rotational angle of the steering wheel or other suitable steering control device may become out of sync with the position of the steer axle, or other suitable steered element, such that the operator may be unable to readily determine the steering request, the actual steered element position, or both, based on the position of the steering device. Such inability may particularly be the case when the vehicle is stationary and the operator is unable to view the steered element angle from the operator station.

Synchronizing the steering wheel position with the steer axle, for example, may allow the operator to more readily determine steer axle angle based on the steering wheel position, for example, to identify if the steer axle has been returned to a center position before accelerating the vehicle from a standstill to avoid inadvertently turning the vehicle. Typical synchronous steering systems adjust the position of one or both of the steering device and the steered element when they become misaligned. However, the present inventors recognized that currently available synchronous steering systems accounts for vehicle parameters to facilitate determining how quickly an adjustment to the steering device, to the steered element, or both, should occur. For example, the present inventors recognized that if such adjustments are made too quickly under certain vehicle conditions, indicated by vehicle parameters, the operator may notice an undesirable erratic or jumpy steering behavior.

Synchronous steering may provide comfort and convenience to the operator. In addition to providing a means to readily determine steer axle position based on steering wheel position, synchronous steering may be used to bring the steering apparatus to a predetermined position for the straight ahead driving condition. The desired straight ahead driving position can be programmed via a user display and may be set by the operator to a comfortable straight ahead driving position.

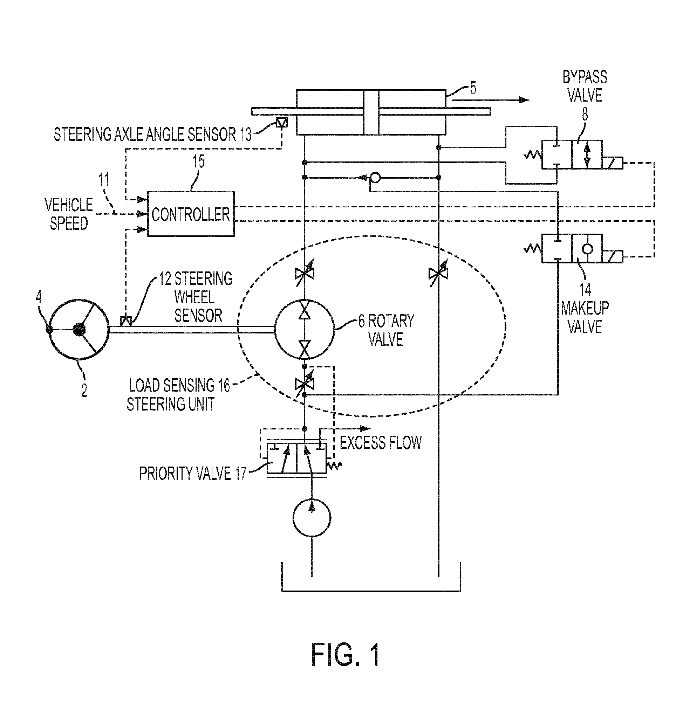

FIG. 1 is a circuit diagram illustrating an exemplary synchronous steering control system. The steering control system comprises a steer axle assembly 5 and a steering wheel 2. The steering wheel 2 comprises a steering control handle 4 or knob. In some examples, the operator may turn the steering wheel 2 by rotating the steering control handle 4 about the circumference of the steering wheel 2.

The steering control system further comprises a vehicle speed sensor 11, a steering wheel angle sensor 12, a steer axle angle sensor 13, a makeup valve 14, a bypass valve 8, a controller 15, a load sensing steering unit 16, a rotary valve 6, and a priority valve 17.

When an operator turns the steering wheel 2, the rotary valve 6 provides a flow of hydraulic fluid to the steer axle assembly 5 (including a hydraulic steering system) to affect rotation of the steer axle, i.e., to change a direction of steering of the vehicle. In some examples, the rotational angle of the steering wheel 2 may become unsynchronized with respect to the position of the steer axle as a result of leakage of hydraulic fluid from the steer axle assembly 5, the hydraulic steering system, or both. Makeup valve 14 is configured to provide additional or supplemental hydraulic fluid to the steer axle assembly 5 in addition to hydraulic fluid provided by the rotary valve 6. In some examples, the additional hydraulic fluid provided by makeup valve 14 may operate to replace the lost hydraulic fluid due to leakage. Such replacement may allow the position of the steer axle to catch-up, or become synchronized with respect to the rotational angle of the steering wheel 2.

In hydrostatic steering systems, it may be possible for the operator to over-steer the steering wheel past the operational turning endpoint. The rotational angle of the steering wheel 2 may become out of sync with the position of the steer axle as a result of the oversteering. Bypass valve 8 is configured to remove or drain a portion of the hydraulic fluid provided by the rotary valve 6 before it reaches the steer axle assembly 5. For example, hydraulic oil may be drained to tank. Such drainage may allow the rotational angle of the steering wheel 2 to catch-up, or re-synch, with the position of the steer axle. Either one of makeup valve 14 or bypass valve 8 may be used in an embodiment, or both makeup valve 14 and bypass valve 8 may be used in an embodiment.

In addition to the above described examples of adding and/or removing hydraulic flow via the makeup valve 14 and bypass valve 8, respectively, similar operations as described above may be used during initialization of the synchronous steering system when the steering wheel 2 and/or control handle 4 may get out of synch with the position of the steer axle.

Although FIG. 1 illustrates both the makeup valve 14 and bypass valve 8 together in one hydraulic system, the steering system may instead include only one of these valves. For example, a system configured with the makeup valve 14 may be configured to add supplemental hydraulic fluid, and a system configured with the bypass valve 8 may be configured to remove or drain a portion of the hydraulic fluid provided by the rotary valve 6. One or both of the bypass valve 8 and the makeup valve 14 may comprise one or more solenoids. One or both valve functions may be included into a single valve operated by one or more solenoids. In some examples, a single solenoid may be equipped with discrete positioning capability to perform functionality associated with both the bypass valve 8 and the makeup valve 14. Additionally, one or both valves may be packaged into an easily-installed manifold directly adjacent to, or included within, the steering cylinder.

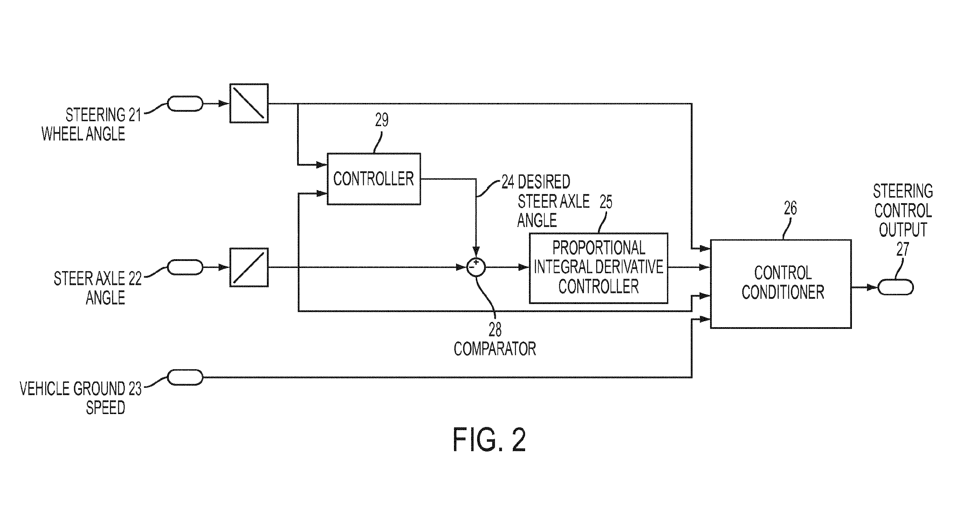

FIG. 2 is a logic control diagram associated with operation of a synchronous steering control system. The logic control diagram may comprise one or more control algorithms. A controller 29 may be used to determine a desired steer axle angle 24 based on input from one or both of a steering wheel angle 21 and a steer axle angle 22. The steer axle angle 22 may be used to determine which turn the steering wheel 2 is currently being rotated in, for example, where the steering wheel 2 may be rotated through a plurality of turns from lock to lock (e.g., from a rotational left/counterclockwise endpoint to a rotational right/clockwise endpoint). The combination of steering wheel angle and identified number of steering turns may be used to determine the desired steer axle angle 24. In some embodiments, only the steering wheel angle 21, or angle of another suitable steering control, may be used to determine a desired steer axle angle 24, or angle of another suitable steered element.

A comparator 28 may be configured to compare the desired steer axle angle 24 with the actual steer axle angle 22 to determine a steer angle differential. The steer axle angle differential may be input to a proportional integral derivative (PID) controller 25. In some examples, the PID controller 25 may generate a proportional gain, an integral gain, and/or a derivative gain based, at least in part, on the steer axle angle differential input. Additionally, the PID controller 25 may be configured to determine a PID output based, at least in part, on a comparison of the proportional gain, integral gain, and/or derivative gain.

A control conditioner 26 may be configured to receive as input the steering wheel angle 21, the steer axle angle 22, a vehicle parameter, such as a vehicle ground speed 23, and/or the PID output to determine a steering control output 27. In some examples, the steering control output 27 may comprise a percentage of available hydraulic flow of a makeup valve, a bypass valve, or both. The steering control output may be indicated by a steering control multiplier ranging between, and including, 1-0 (e.g., as a percentage of steering control output 27).

The control conditioner 26 may operate as a multiplier of one of more of the inputs. For example, the control conditioner 26 may multiply the PID output with the inputs of the steering wheel angle 21, the steer axle angle 22, and/or the vehicle ground speed 23. One or more of the inputs may comprise a range of values. The range of values may include zero and one (e.g., 0% and 100%). In some examples, if any input received by the control conditioner is zero, then the steering control output 27 may also be determined to be zero. In another example, if a vehicle parameter is above a threshold, the steering control output 27 may be desired to be zero, thus a multiplier of zero may be used. A steering control output 27 of zero may indicate that no adjustment or synchronization of the steering system is to be made, at least temporarily.

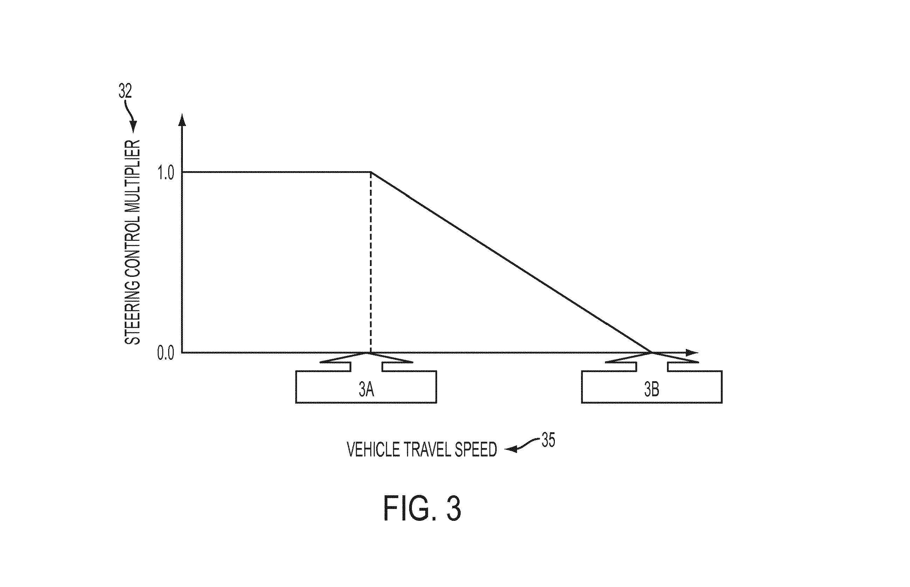

FIG. 3 is an example diagram illustrating a steering control multiplier 32 as a function of vehicle travel speed 35. A first travel speed 3A may be associated with a maximum or 100% steering control multiplier 32, such as steering control output 27 multiplied by one, whereas a second travel speed 3B may be associated with a minimum or 0% steering control multiplier 23, such as steering control output 27 multiplied by zero. Other suitable maximum and minimum steering control multipliers may be used. By way of illustration and without limitation, the first travel speed 3A may comprise a first rate of travel, such as four miles per hour, and the second travel speed 3B may comprise a second rate of travel, such as five and one half miles per hour.

When the vehicle travel speed 35 (e.g., ground speed) is less than the first travel speed 3A, the steering system may be configured to apply the maximum steering control multiplier. When the vehicle travel speed 35 (e.g., ground speed) is greater than the second travel speed 3B, the steering system may be configured to apply the minimum steering control multiplier. At vehicle travel speeds between the first travel speed 3A and the second travel speed 3B, the steering system may be configured to provide a linear rate of change of the steering control multiplier 32 from the maximum control multiplier, such as 1, to the minimum control multiplier, such as 0. In other embodiments, non-linear rates of change may be used. Providing varying levels of the control multiplier 32 may help to smooth actuation of a steering motor used to turn the steer axle. For example, at relatively high travel speeds where the effect of changes to the steer axle angle may be more noticeable, the steering system may be configured to reduce the steering control multiplier 32, and/or to eliminate the effect of the steering control output 27, to avoid abrupt changes in steering angle.

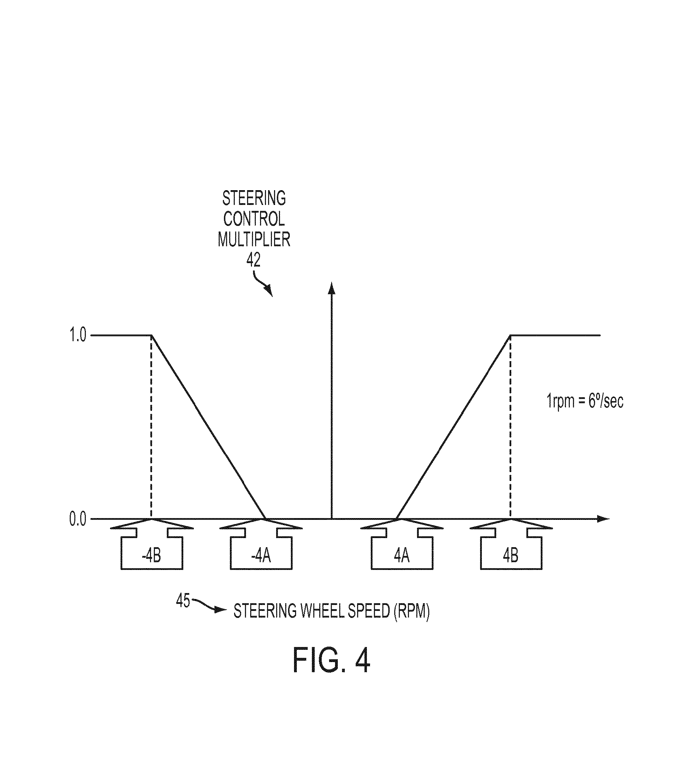

FIG. 4 is an example diagram illustrating a steering control multiplier 42 as a function of a steering wheel rotational speed 45. The steering wheel rotational speed 45 may be measured in and/or indicated as the number of revolutions per minute (RPM), angular velocity, etc. In some examples, a first steering wheel rotational speed 4A may be associated with a predetermined minimum, or a 0% steering control multiplier, whereas a second steering wheel rotational speed 4B may be associated with a predetermined maximum, or a 100% steering control multiplier. By way of illustration and without limitation, the first steering wheel rotational speed 4A may comprise a first rate of rotational speed, such as plus or minus 4 RPM, in other words, clockwise and counterclockwise for a steering wheel, and the second steering wheel rotational speed 4B may comprise a second rate of rotational speed, such as plus or minus 12 RPM.

When the steering wheel rotational speed 45 is between zero and the first steering wheel rotational speed 4A, the steering system may be configured to apply the minimum steering control multiplier 42, which in some examples is zero. When the steering wheel rotational speed 45 is greater than the second steering wheel rotational speed 4B, the steering system may be configured to apply the maximum steering control multiplier 42, which in some examples is one. At steering wheel rotational speeds between the first steering wheel rotational speed 4A and the second steering wheel rotational speed 4B, the steering system may be configured to provide a linear rate of change of the steering control multiplier 42 from the minimum control multiplier to the maximum control multiplier. In other embodiments, a non-linear change to the control multiplier may be used.

By way of convention, steering wheel speeds in a clockwise direction (e.g., steering wheel rotational speeds 4A and 4B) may be considered as positive rotations, and steering wheel speeds in a counterclockwise direction (e.g., steering wheel rotational speeds -4A and - 4B) may be considered as negative rotations. A similar steering control multiplier 42 may be reflected while turning the steering wheel in either the clockwise or counterclockwise direction. The range of steering wheel speeds between wheel rotational speed 4A and -4A may be considered a "dead-band" where no supplemental hydraulic fluid is provided to the steering system (e.g., where no synchronized steering is requested).

Providing varying levels of a control multiplier may help to smooth actuation of a steering cylinder (or actuator) used to turn the steer axle. For example, at relatively low rotational speeds, vibration of the vehicle and/or inadvertent movement of an operator's hands may cause a certain amount of rotation of the steering wheel. By eliminating or reducing the steering control multiplier 42 to a minimum (or zero) level, the effect of vibration or inadvertent movement may be discounted or ignored to avoid abrupt changes in steering angle. In some examples, the synchronized steering system may be configured to be activated only when the steering wheel rotation speed 45 exceeds an absolute value or threshold rotational speed.

In some examples, the steering control multiplier 32, the steering control multiplier 42, or both, may be used to determine a steering control output (e.g., amount of hydraulic fluid) that may be added to, or subtracted from, the hydraulic fluid provided by the load sensing steering unit 16 (FIG. 1). The steering control output may be added or subtracted as a binary function, for example either being on (100%) or off (0%) at any one point in time. In some examples, a makeup valve and/or bypass valve (e.g., makeup valve 14 and bypass valve 8 of FIG. 1) may be modulated between the on and off positions over some discrete period of time to simulate a position, provide, and/or remove an amount of hydraulic flow that is intermediate the on and off positions of either one or both valves.

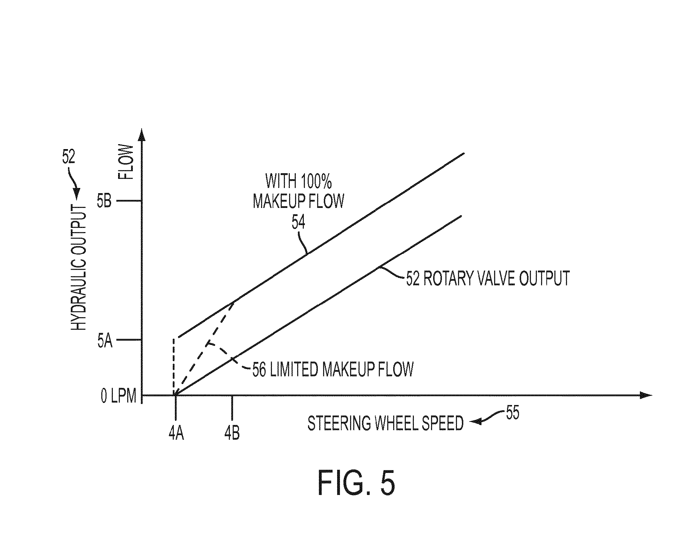

FIG. 5 is an example diagram illustrating steering control valve hydraulic output as a function of a steering rotational speed 55. The level of steering control valve hydraulic output may be determined based, at least in part, on the steering control multiplier 42 of FIG. 4.

A rotary valve output 52 may be associated with a load sensing steering unit including a rotary valve, such as rotary valve 6 of FIG. 1. The rotary valve may be configured to provide hydraulic fluid to a steering system in response to detecting a first steering wheel rotational speed 4A. First steering wheel rotational speed 4A may comprise a minimum threshold steering wheel speed. Below the first steering wheel rotational speed 4A, the rotary valve output 52 may be zero. In some examples, the rotary valve output 52 may be proportional to the steering wheel speed 55 above the first steering wheel rotational speed 4A.

The synchronized steering control system may be configured to be activated only when the steering wheel speed 55 is greater than the first steering wheel rotational speed 4A. At the first steering wheel rotational speed 4A, a 100% supplemental hydraulic output 54 associated with the synchronized steering control system (e.g., output by makeup valve 14 of FIG. 1) may substantially instantaneously increase from a hydraulic flow of zero liters per minute (L/min) to a first hydraulic output 5A.

In some examples, the hydraulic output of the synchronized steering control system may be modulated between the first steering wheel rotational speed 4A and the second steering wheel rotational speed 4B in order to gradually increase the supplemental/makeup flow of hydraulic fluid from zero to the 100% supplemental hydraulic output 54. The gradual increase of hydraulic fluid is shown as supplemental hydraulic output 56. Supplemental hydraulic output 56 may comprise a graduated or linear change in hydraulic output 52 from zero L/min to the 100% supplemental hydraulic output 54. In some examples, the linear change in supplemental hydraulic output 56 may correspond to the linear change in the steering control multiplier 42 as illustrated in FIG. 4.

The first hydraulic output 5A may be less than a maximum hydraulic output 5B. By way of illustration and without limitation, the first hydraulic output 5A may comprise a first hydraulic output, such as 2 L/min, and the maximum hydraulic output 5B may comprise a second rate of hydraulic output, such as 12 L/min.

Adjusting a steering control multiplier may be based on other suitable vehicle parameters, alone, or in addition to vehicle speed and the rate of change of a steering device. For example, vehicle mass may be used such that a loaded vehicle (larger mass) is associated with a smaller control multiplier than an unloaded vehicle (lesser mass); or vehicle direction may be used. A vehicle parameter may be used alone or in conjunction with one or more other vehicle parameters. When multiple vehicle parameters are used to adjust a steering control multiplier, they may be weighted evenly or unevenly, for example, one or more parameters may be given more weight than other parameter(s).

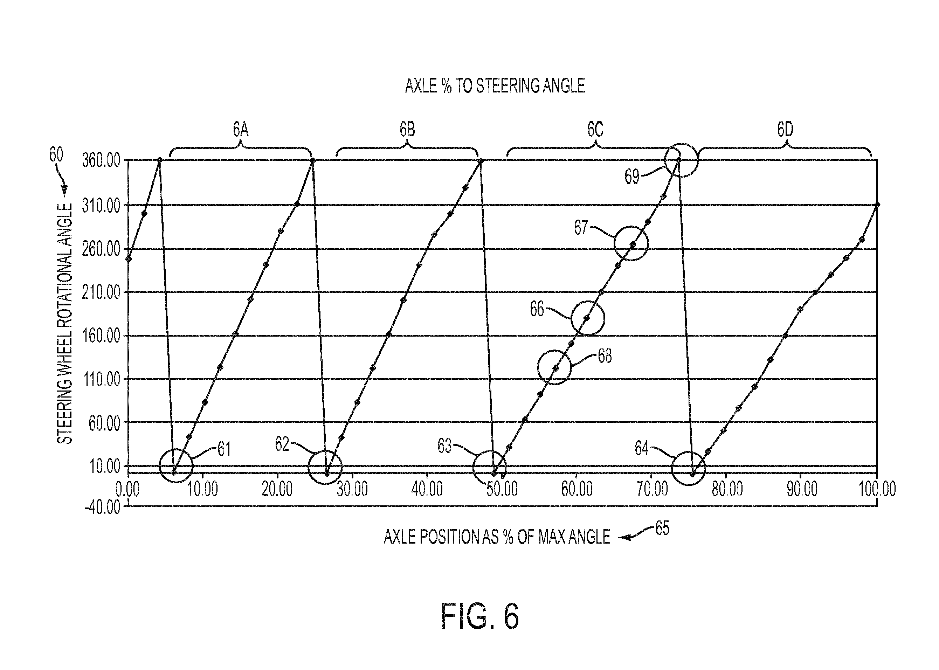

FIG. 6 is an example diagram illustrating a mapped coordinate system associated with a synchronous steering control system. The mapped coordinate system may comprise a steering wheel rotational angle 60 and a steer axle position 65. The steer axle position may be provided as a percentage of maximum turning angle, e.g., from between zero and 100 percent. In some example, a zero percent steer axle position indicates a maximum turning angle in a first steering direction, and a 100 percent steer axle position may indicate a maximum turning angle in a second steering direction opposite the first steering direction. An approximately 50 percent steer axle position may indicate a straight ahead or return to center position, although different percentages may indicate the return to center position such as where the steering system has unsymmetrical left and right turning linkage arrangements.

The steering wheel rotational angle 60 may correspond to one or more rotations of steering wheel turns. For example, a steering wheel may be configured to make multiple complete rotations of 360 degrees each, and/or partial rotations. By way of illustration and without limitation, the number of rotations of the steering wheel may be approximately four rotational turns, shown as a first turn 6A, a second turn 6B, a third turn 6C, and a fourth turn 6D, although the actual number of turns may be greater or fewer depending on the application.

Each of the turns 6A, 6B, 6C, 6D may be associated with an initial starting point such as starting point 61, starting point 62, starting point 63 and starting point 64, respectively, in addition to an endpoint, and any number of intermediate positions. The end point of one turn, such as endpoint 69 of turn 6C may occur just prior to, after, or coincide with, the initial starting point 64 of another turn, such as turn 6D.

The steering system may be configured to determine which turn corresponds to the position of the steering wheel. The corresponding turn may be determined based, at least in part, on the axle position 65. Upon initialization, the steering system may be configured to synchronize the position of the steering wheel rotation at the initial starting point 63 of turn 6C with an axle positioned straight ahead or returned to center (e.g., at 50%).

When the steering wheel rotational angle 60 gets out of synch with the steer axle position 65, the synchronous steering system may be configured to adjust and/or calibrate the position of the steer axle, e.g., by applying the steering control multiplier and/or the steering control output 27 (FIG. 1) which may be used to determine a percentage of supplemental hydraulic flow of a makeup valve and/or the amount of hydraulic flow that is drained or removed via a bypass valve. The steering system may be configured to allow the steering wheel to catch up with the axle position before the axle is steered further as a result of the additional rotation of the steering wheel. In one example, the synchronous steering system will wait until the direction of rotation of the steering wheel is reversed before synching the steering wheel and steer axle.

In some examples, when the steering wheel rotational angle 60 indicates the initial starting point 63 and the axle position 65 indicates a steering wheel rotational angle corresponding to rotational angle 68, the steering system may adjust the position of the steer axle to coincide with initial starting point 63. A solenoid valve, such as bypass valve 8 (FIG. 1) may be configured to remove and/or redirect a portion of the amount of hydraulic fluid provided by the load sensing steering unit so that the rate of change of position of the steer axle slows down with respect to the rotation of the steering wheel until they are synchronized.

There may be four identical wheel rotational angles, e.g. positions 61, 62, 63, and 64, corresponding to each of the turns 6A, 6B, 6C, and 6D, respectively, which are associated with different axle positions. In some examples, the steering system may be configured to select one of four possible turns that provides the closest match between both the steering wheel rotational angle 62 and the axle position 65. The closest turn may be selected from the mapped coordinates in order to more quickly synchronize the steering wheel with the steer axle.

On the other hand, when the steering wheel rotational angle 60 indicates the initial starting point 63 and the axle position 65 indicates a steering wheel rotational angle 67 which is greater than 50% of the corresponding rotational angle of the third turn (as indicted by rotational angle 66), the steering system may instead determine to apply the steering control multiplier and/or the steering control output 27 (FIG. 1) for adding the supplemental hydraulic flow until the steer axle position matches the rotational angle corresponding to the starting point 64 of turn 6D.

The mapped coordinate system illustrated in FIG. 6 may be converted into a linear or continuous plot of data which superimposes the endpoint (e.g., endpoint 69) of one turn with the starting point (e.g., starting point 64) of an adjacent turn. Additionally, the straight ahead, return to center, or neutral position of the steering position may be customized according to an operator preference. The reference center of steering may be calibrated to any angle of steering wheel, for example based on input of the steering wheel. The reference desired steering angle may be offset by the new calibrated value.

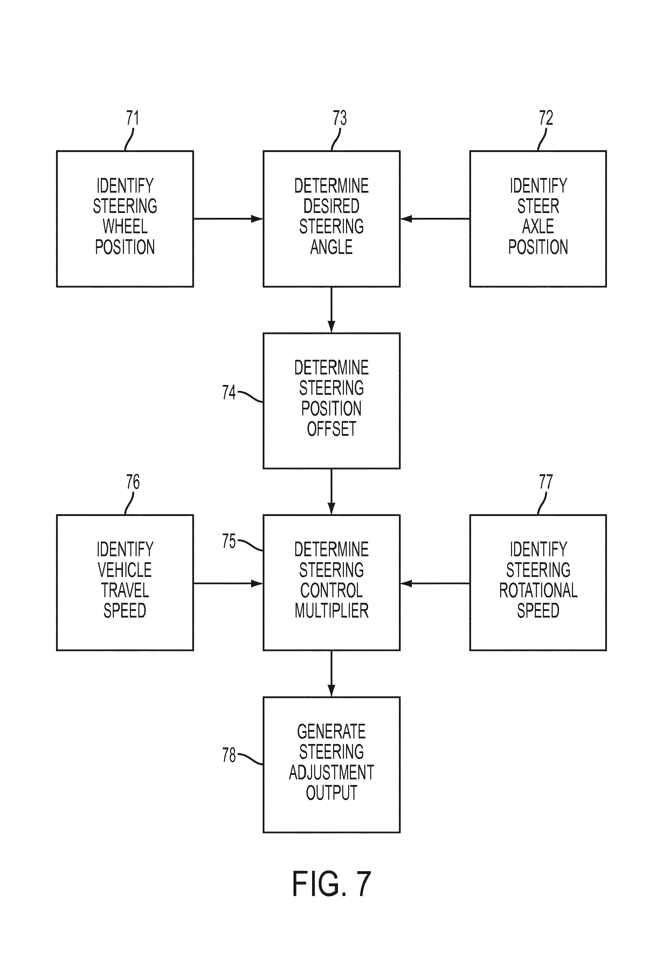

FIG. 7 illustrates an example process of synchronizing a steering control system. At operation 71, a steering wheel position may be identified. The steering wheel position and/or steering angle may be identified by a sensor associated with, or integrated into, the steering wheel. In one example, the steering wheel angle may correspond to a relative position of a steering control or knob located on the steering wheel.

At operation 72, a steer axle position and/or angle may be identified. The steer axle position may be identified by a sensor associated with, or integrated into, the steer axle assembly and/or a steer tire/wheel. In one example, the steer axle position may be identified as ranging between zero (minimum) and 100 percent (maximum) of an available range of motion. A minimum or zero input may indicate that the steer axle is turned completely in a counterclockwise direction, and a maximum input may indicate that the steer axle is turned completely in a clockwise direction. In some examples, the steer axle position may be generated, input, transmitted, converted, measured, and/or received, as a voltage value.

At operation 73, a desired steering angle may be determined based, at least in part, on the steering wheel position and/or the steer axle position. For example, the desired steering angle may be determined based on an angle of rotation of the steering wheel, and a rotational turn of the steering wheel as determined from the steer axle position.

At operation 74, a steering position offset may be determined as between the desired steering angle and the axle position. The steering position offset may be determined by a comparator which determines the numerical difference and/or absolute difference between the desired steering angle and the axle position.

At operation 76, a vehicle parameter, such as travel speed, may be identified. The vehicle travel speed may be identified by a sensor. The sensor may be associated with, and or integrated into, a wheel, an axle, an engine output, an engine speed, an accelerator pedal, or other speed sensing devices.

At operation 77, a second vehicle parameter, such as steering rotational speed, may be identified. The steering rotational speed may be identified by a sensor associated with, or integrated into, the steering wheel. Other suitable vehicle parameters such as mass and direction of travel may be used in place of, or with, travel speed and steering speed.

At operation 75, one or more of the steering position offset, vehicle travel speed, axle position and/or steering rotational speed may be used to determine a steering control multiplier. In some examples, the steering control multiplier may be determined by multiplying the one or more inputs together. In some examples, the steering control multiplier may be calibrated to provide for a smooth transition for relatively high vehicle travel speeds and/or relatively slow turning wheel rotations. The steering control multiplier may be calibrated according to the amount of steering position offset and a determination if the amount of offset is positive or negative.

At operation 78, a steering adjustment output may be generated based, at least in part, on the steering control multiplier. The steering adjustment output may be used to adjust the steer axle angle to match the steering wheel position, or vice versa.

The steering position offset may be identified as being positive when the axle position corresponds to a rotational angle which is greater than the desired steering angle. The steering system may allow the steering wheel to catch up to the steer axle position until the desired steering angle equals the steer axle angle. In some examples, the steering system may cause the assisted steering to decrease the rate of change in position of the steer axle angle until the steer axle angle equals the desired steering angle.

The steering position offset may be identified as being negative when the axle position corresponds to a rotational angle which is less than the desired steering angle. In some examples, the steering system will cause the assisted steering to increase the rate of change of the steer axle angle until the steer axle angle equals the desired steering angle. In some examples, the rate of change of the steer axle may be increased and/or decreased by adding and/or subtracting supplemental hydraulic fluid to the hydraulic output of a load sensing steering system, such as the system illustrated in FIG. 1.

The systems and apparatus described above may use dedicated processor systems, micro controllers, programmable logic devices, microprocessors, or any combination thereof, to perform some or all of the operations described herein. Some of the operations described above may be implemented in software and other operations may be implemented in hardware. One or more of the operations, processes, and/or methods described herein may be performed by an apparatus, a device, and/or a system substantially similar to those as described herein and with reference to the illustrated figures.

The processing device may execute instructions or "code" stored in memory. The memory may store data as well. The processing device may include, but may not be limited to, an analog processor, a digital processor, a microprocessor, a multi-core processor, a processor array, a network processor, or other suitable device. The processing device may be part of an integrated control system or system manager, or may be provided as a portable electronic device configured to interface with a networked system either locally or remotely via wireless transmission.

The processor memory may be integrated together with the processing device, for example RAM or FLASH memory disposed within an integrated circuit microprocessor or the like. In other examples, the memory may comprise an independent device, such as an external disk drive, a storage array, a portable FLASH key fob, or other suitable device. The memory and processing device may be operatively coupled together, or in communication with each other, for example by an I/O port, a network connection, or the like, and the processing device may read a file stored on the memory. Associated memory may be "read only" by design (ROM) by virtue of permission settings, or not. Other examples of memory may include, but may not be limited to, WORM, EPROM, EEPROM, FLASH, or other suitable device, which may be implemented in solid state semiconductor devices. Other memories may comprise moving parts, such as a conventional rotating disk drive. All such memories may be "machine-readable" and may be readable by a processing device.

Operating instructions or commands may be implemented or embodied in tangible forms of stored computer software (also known as "computer program" or "code"). Programs, or code, may be stored in a digital memory and may be read by the processing device. "Computer-readable storage medium" (or alternatively, "machine-readable storage medium") may include all of the foregoing types of memory, as well as new technologies of the future, as long as the memory may be capable of storing digital information in the nature of a computer program or other data, at least temporarily, and as long as the stored information may be "read" by an appropriate processing device. The term "computer-readable" may not be limited to the historical usage of "computer" to imply a complete mainframe, mini-computer, desktop or even laptop computer. Rather, "computer-readable" may comprise storage medium that may be readable by a processor, a processing device, or any computing system. Such media may be any available media that may be locally and/or remotely accessible by a computer or a processor, and may include volatile and non-volatile media, and removable and non-removable media, or any combination thereof.

A program stored in a computer-readable storage medium may comprise a computer program product. For example, a storage medium may be used as a convenient means to store or transport a computer program. For the sake of convenience, the operations may be described as various interconnected or coupled functional blocks or diagrams. However, there may be cases where these functional blocks or diagrams may be equivalently aggregated into a single logic device, program or operation with unclear boundaries.

It will be apparent to those skilled in the art that various modifications and variations can be made to the systems and methods of the disclosure. Other embodiments of the methods and systems will be apparent to those skilled in the art from consideration of the specification and practice of the methods and systems disclosed herein. It is intended that the specification and examples be considered as exemplary only, with a true scope of the invention being indicated by the claims and their equivalents.

## Claims

1. A method for correlating a steering device position to a steered element position comprising:
determining a target steering angle based on a detected position of the steering device;
determining a vehicle steering angle based on a detected position of the steered element;
determining a steering correction based on comparing the target steering angle to the vehicle steering angle;
applying a steering control multiplier to affect the steering correction in response to (i) a difference between the target steering angle and the vehicle steering angle being larger than a threshold difference, and (ii) a detected vehicle parameter.

2. A method according to claim 1, further comprising selecting the steering control multiplier from a range of 0 to 1 based on a magnitude of the detected vehicle parameter.

3. A method according to claim 2, wherein a detected vehicle parameter comprises at least two detected vehicle parameters.

4. A method according to claim 3, wherein selecting the steering control multiplier from a range of 0 to 1 based on a magnitude of the detected vehicle parameter further comprises weighting a first detected vehicle parameter more than a second detected vehicle parameter.

5. A method according to claim 1, wherein the steering control multiplier varies based on changes in the detected vehicle parameter.

6. A method according to claim 5, wherein the steering control multiplier is set to zero based on a comparison of a magnitude of the detected vehicle parameter to a threshold magnitude.

7. A method according to claim 1, wherein the steering device comprises a steering wheel and the steered element comprises a vehicle wheel.

8. A system for correlating a steering device position to a steered element position comprising:
a first sensor arranged to detect a position of the steering device, wherein the first sensor communicates with a processor configured to determine a target steering angle based on the detected position of the steering device;
a second sensor arranged to detect a position of the steered element, wherein the second sensor communicates with the processor and the processor is further configured to determine a vehicle steering angle based on the detected position of the steered element;
wherein the processor is further configured to determine a steering correction based on comparing the target steering angle to the vehicle steering angle;
wherein the processor is further configured to determine a steering control multiplier based on (i) a difference between the target steering angle and the vehicle steering angle being larger than a threshold difference, and (ii) a detected vehicle parameter; and
a steering correction system configured to apply the steering control multiplier to affect the steering correction.

9. A system according to claim 8, wherein the processor is further configured to select the steering control multiplier from a range of 0 to 1 based on a magnitude of the detected vehicle parameter.

10. A system according to claim 8, wherein the detected vehicle parameter comprises at least two detected vehicle parameters.

11. A system according to claim 10, wherein the processor is further configured to select the steering control multiplier from a range of 0 to 1 based on a magnitude of the detected vehicle parameter, and a first detected vehicle parameter is weighted more than a second detected vehicle parameter.

12. A system according to claim 8, wherein the processor is further configured to vary the steering control multiplier based on changes in the detected vehicle parameter.

13. A system according to claim 12, wherein the processor is further configured to set the steering control multiplier to zero based on a comparison of a magnitude of the detected vehicle parameter to a threshold magnitude.

14. A system according to claim 8, wherein the steering device comprises a steering wheel and the steered element comprises a vehicle wheel.
